# EUROPEAN PATENT SPECIFICATION

(11) **EP 0 668 494 B1**
(45) Date of publication and mention of the grant of the patent: **28.10.1998**
(21) Application number: 95850036.5
(22) Date of filing: 16.02.1995
(51) Int. Cl.: G01M 13/04

(54) **An adapter for determining the state of rolling bearings**
Ein Adapter zur Feststellung des Zustandes an Kugellagern
Un adaptateur pour déterminer l'état des paliers à roulement

(30) Priority: 18.02.1994 SE 9400568
(43) Date of publication of application: 23.08.1995
(73) Proprietor: SPM INSTRUMENT INTERNATIONAL AB, S-645 21 Strängnäs (SE)
(72) Inventor: Friehs, August, S-645 42 Strängnäs (SE); Holm, Tore, S-645 42 Strängnäs (SE)
(74) Representative: Hammar, Ernst A

(56) References cited:
- US-A- 3 075 099
- US-A- 3 395 569
- US-A- 3 939 703
- US-A- 4 417 476
- US-A- 4 481 819
- US-A- 4 672 850
- US-A- 4 823 602

## Description

Rolling bearings (ball bearings and roller bearings) are now often monitored by measuring vibrations at regular intervals with the aid of a sensor, thereby enabling the lubricated state of the bearings and the gradual wear suffered thereby to be monitored and malfunctioning therewith avoided. This technique is described in SE-C-339 576 and in DE-A-2 151 284.

In accordance with this technique, there is normally attached adjacent each bearing as a matter of routine an adapter onto which a piezoelectric transducer included in the measuring instrument is attached with a metallic abutment. In order to obtain good signal strength, the adapter must be mounted correctly, in principle direct in the bearing housing and within the zone in which the bearing is subjected to load.

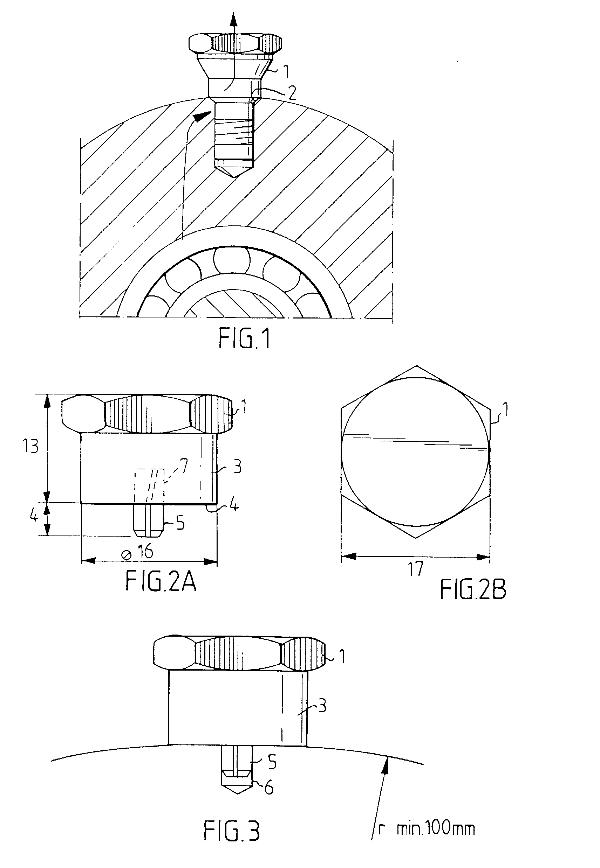

In the case of one known adapter (Fig. 1) which is used generally at present, there is drilled from outside the bearing housing a hole which is provided with a screw-thread and the outwardly facing orifice of which is countersunk conically with an accurately determined cone angle. An adapter, generally like a bolt, having an hexagonal head 1 which has a base having the same cone angle 2, and a stem having a waist and a short screw-thread, size M8, corresponding to the screw-thread in the hole at one end of the adapter. Since the space available is often confined, it may be necessary to drill the hole with the aid of an angle drilling tool and then thread and countersink the hole with a hand tool, which can be difficult in many instances. The conical contact surface in the hole intended for the adapter can be obtained with the aid of a separate countersink having a guide pin which is moved relative to the thread. After carefully blowing clean the hole, the adapter is then screwed into the hole until the two conical surfaces abut one another at 2, whereafter the adapter is carefully tightened with the aid of a torque wrench, so that the tensioning or tightening force in the stem will ensure good metallic contact between the encircling cone surfaces, without this contact being lost as a result of vibration.

It is not always simple to form a hole at the best position from a vibration transfer aspect in relation to the bearing. Similarly, it is often impossible to insert the adapter where it would be beneficial from a measuring aspect, due to the reduction in the mechanical strength of the bearing housing that would result from providing a sufficiently large hole. Consequently, it is often necessary to fit the adapter at a place which will not provide an optimal measuring signal and/or which is difficult to reach.

Adapters with flat surfaces are known from US-A-4 823 602 and US-A-3 075 099.

An object of the invention is to provide an improved adapter which can be fitted simply, which can be fitted in a more optimal position in relation to a bearing, and which in an advantageous embodiment can also be fitted when, for different reasons, it is impossible to form a hole required for the fitting of earlier known adapters.

These objects, and other objects apparent from the following description, are achieved in accordance with the invention with an adapter of Claim 1. Beneficial embodiments are defined in the depending Claims.

The invention will now be described with reference to an exemplifying embodiment thereof and with reference to the accompanying drawings. Fig. 1 has already been described and illustrates an earlier known adapter. Figs. 2A and 2B illustrate an adapter with the measurements given in millimeters, in accordance with the principle of the invention. Fig. 3 is a schematic illustration of a fitted adapter.

Similar to the known adapter shown in Fig. 1, the adapter shown in Figs. 2A, 2B and 3 has an hexagonal head 1, therewith ensuring complete compatibility. The adapter is lengthened in the extension of the hexagonal head with a cylindrical part 3 which terminates in a flat part 4 extending perpendicular to the direction of the cylinder axis. Drilled in the centre of the flat part 4 is a hole 7 into which there is inserted a resilient standard-type tubular pin 5 (DIN 1481) made of hardened spring steel and having a nominal measurement of 4 mm. This construction has been chosen in order to obtain a pin that can be removed, although if this is not considered necessary the pin may be of another kind, although it must be resilient in its transverse direction.

The head of the illustrated adapter is hexagonal mainly because the heads of earlier known adapters are hexagonal, since they must be screwed into position. Because this head configuration is not necessary in the case of the present invention, the hexagonal head can be excluded and replaced with an expanding ring which will provide a grip for a vibration sensor.

When fitting the adapter in accordance with Fig. 3, there is sought a place around a bearing in a machine in which metallic connection is found with the outer ring of a rolling bearing, preferably in direct contact. A small hole 6, slightly smaller than the tubular pin 5, is then drilled in the place chosen, which will preferably be flat but which can be permitted to have a radius down to 100 mm. Otherwise, it may be necessary to plane-off and grind-down the material in this area in order to achieve effective mechanical contact. A minimum requirement is that good metallic linear contact is obtained, and hence the surface should not be curved. After cleaning the surface, a quickly acting glue is applied to said surface and in the hole, whereafter the adapter is fitted and pressed down so as to ensure good contact. Such glues are commercially available, for instance isocyanate-based glues.

Even though the hole 6 in which the resilient pin 5 is fitted is very small, particularly in comparison with the M8 hole used in accordance with earlier known techniques, and thus results in far less problems from the aspect of mechanical strength, there may be reasons why this small hole cannot be allowed. This can be due to actual mechanical strength problems, but may also be due to warranty conditions. The inventive adapter can also be used in cases such as these. Thus, the tubular pin can be squeezed together with the aid of pliers, for instance, and withdrawn from the adapter - the tubular pin, which is normally destroyed in the process, is thrown away. The metal surface at the place where the adapter is to be fitted is then cleaned and glue is applied to the adapter on the surface 4 facing the cleaned surface, using the same sort of glue as that mentioned above. The glue will harden almost immediately. The fitted adapter is seated sufficiently firmly to ensure that it will function well when taking measurements. Its resistance to impact forces, however, is much lower than when the adapter can be fitted with the aid of a hole and a pin.

## Claims

1. An adapter which can be fitted in the proximity of a rolling bearing and to which there can be fitted a vibration measuring instrument, wherein the adapter includes a head (1) onto which the vibration measuring instrument can be mounted, and fastener means for fastening the adapter to a bearing housing, wherein the adapter includes a flat surface (4) which is located opposite the head (1) and which has a pin (5) which projects from the surface (4) perpendicularly thereto, which pin is resilient or flexible in its transverse direction.

2. An adapter according to Claim 1, wherein the pin (5) is a resilient tubular pin which is removably mounted in a hole (7) formed in the flat surface (4).

3. An adapter according to Claim 1, wherein the head (1) has a hexagonal configuration.

## Patentansprüche

1. Ein Adapter, der in der Nähe eines Wälzlagers anbringbar ist, und an den ein Vibrationsmeßinstrument befestigt werden kann, wobei der Adapter einen Kopf (1), auf den das Vibrationsmeßinstrument angebracht werden kann, und Befestigungsmittel zum Befestigen des Adapters an ein Lagergehäuse aufweist,
**worin**
der Adapter eine dem Kopf (1) gegenüberliegende flache Fläche (4) aufweist, die einen Stift (5) besitzt, der senkrecht von der Fläche (4) hervorsteht und der in seiner Querrichtung elastisch oder flexibel ist.

2. Adapter nach Anspruch 1, **worin** der Stift (5) ein elastischer röhrenförmiger Stift ist, der demontierbar in einem in der flachen Fläche (4) ausgebildeten Loch (7) befestigt ist.

3. Ein Adapter nach Anspruch 1, **worin** der Kopf (1) eine sechseckige Gestalt besitzt.

## Revendications

1. Adaptateur pouvant être fixé à proximité d'un palier à roulement et auquel peut être fixé un instrument de mesure de vibrations, dans lequel l'adaptateur comporte une tête (1) sur laquelle l'instrument de mesure de vibrations peut être monté, et des moyens de solidarisation pour solidariser l'adaptateur à un boîtier de roulement, dans lequel l'adaptateur comporte une surface plate (4) qui est disposée à l'opposé de la tête (1) et qui a une cheville (5) qui dépasse de la surface (4) perpendiculairement à celle-ci, laquelle cheville est élastique ou souple dans sa direction transversale.

2. Adaptateur selon la revendication 1, dans lequel la cheville (5) est une cheville tubulaire élastique qui est montée amoviblement dans un trou (7) formé dans la surface plate (4).

3. Adaptateur selon la revendication 1, dans lequel la tête (1) a une forme hexagonale.
